# EUROPEAN PATENT APPLICATION

(11) **EP 4 841 477 A1**
(43) Date of publication of application: **18.11.2026**
(21) Application number: 25801496.8
(22) Date of filing: 24.04.2025
(51) Int. Cl.: G06F 16/9535

(54) **INTERACTION METHOD AND APPARATUS, AND ELECTRONIC DEVICE AND STORAGE MEDIUM**

(30) Priority: 25.03.2025 CN 202510358056
(71) Applicant: Launch Tech Co., Ltd., Shenzhen, Guangdong 518000 (CN)
(72) Inventor: LIU, Xin, Shenzhen, Guangdong 518000 (CN); HONG, Zhaofeng, Shenzhen, Guangdong 518000 (CN)
(74) Representative: Mathys & Squire
(86) International application number: PCT/CN2025/090935
(87) International publication number: WO 2026/199662

(57) **Abstract**

An interaction method and apparatus, an electronic device, and a storage medium are disclosed in the disclosure. The method includes the following. A first model is trained using vehicle data of a vehicle supported for diagnosis by a vehicle diagnostic product, and then an interaction apparatus obtains a first question in response to an input operation of a user, where the first question is used for querying vehicle information supported for diagnosis. Next, the interaction apparatus obtains a first answer to the first question based on the first question and the first model. Then, the interaction apparatus displays the first answer. That is, artificial intelligence is adopted to help the user query or determine the vehicle information supported for diagnosis, without manual searching and querying by the user on an interface of the vehicle diagnostic product, which is both efficient and accurate and can improve the user experience.

## Description

### CROSS-REFERENCE TO RELATED APPLICATION(S)

The present application claims priority to Chinese Patent Application No. 202510358056.2, filed March 25, 2025, and entitled "INTERACTION METHOD AND APPARATUS, ELECTRONIC DEVICE, AND STORAGE MEDIUM", the entire disclosure of which is hereby incorporated by reference.

### TECHNICAL FIELD

This disclosure relates to the field of artificial intelligence technology, in particular to an interaction method and apparatus, an electronic device, and a storage medium.

### BACKGROUND

With the development of artificial intelligence technology and the emergence of a large language model, this technology has been increasingly used in the automobile industry to meet requirements of a user.

When the user wants to determine vehicle information supported for diagnosis by a certain vehicle diagnostic product, for example, vehicle information such as a brand, a model, a year, and a function of a vehicle supported for diagnosis, at present, the user generally determines the vehicle information through manual searching and querying on an interface of the vehicle diagnostic product (where the interface contains the vehicle information supported for diagnosis). Due to a large data volume of the vehicle information such as the brand and the model of the vehicle supported for diagnosis by the vehicle diagnostic product, problems such as complicated querying process and incomplete information display may occur in the process of querying a web page by the user, which results in both low efficiency and low accuracy of the determination, and thus, requirements of the user for simple and efficient access to the vehicle information supported for diagnosis cannot be met.

Therefore, how to efficiently and accurately determine the vehicle information supported for diagnosis to improve the user experience is a problem to be solved.

### SUMMARY

An interaction method and apparatus, an electronic device, and a storage medium are provided in the disclosure, which can efficiently and accurately determine vehicle information supported for diagnosis to improve the user experience.

In a first aspect, an interaction method is provided in the disclosure. The method is applied to an interaction apparatus, and includes the following. A first question is obtained in response to an input operation of a user, where the first question is used for querying vehicle information supported for diagnosis. A first answer to the first question is displayed, where the first answer is obtained based on the first question and a first model, and the first model is trained using vehicle data of a vehicle supported for diagnosis by a vehicle diagnostic product.

In a second aspect, an interaction method is provided in the disclosure. The method is applied to a server, and includes the following. A first question is obtained, where the first question is used for querying vehicle information supported for diagnosis. A first answer to the first question is generated based on the first question and a first model, where the first model is trained using vehicle data of a vehicle supported for diagnosis by a vehicle diagnostic product.

In a third aspect, an interaction apparatus is provided in the disclosure. The interaction apparatus includes a first obtaining unit and a first processing unit. The first obtaining unit is configured to obtain a first question in response to an input operation of a user, where the first question is used for querying vehicle information supported for diagnosis. The first processing unit is configured to display a first answer to the first question, where the first answer is obtained based on the first question and a first model, and the first model is trained using vehicle data of a vehicle supported for diagnosis by a vehicle diagnostic product.

In a fourth aspect, a server is provided in the disclosure. The server includes a second obtaining unit and a second processing unit. The second obtaining unit is configured to obtain a first question, where the first question is used for querying vehicle information supported for diagnosis. The second processing unit is configured to generate a first answer to the first question based on the first question and a first model, where the first model is trained using vehicle data of a vehicle supported for diagnosis by a vehicle diagnostic product.

In a fifth aspect, an electronic device is provided in the disclosure. The electronic device includes a processor and a memory. The processor is connected with the memory, the memory is configured to store a computer program, and the processor is configured to execute the computer program stored in the memory, to cause the electronic device to execute the method in the first aspect or the second aspect.

In a sixth aspect, a computer-readable storage medium is provided in the disclosure. The computer-readable storage medium is configured to store a computer program which, when executed by a processor, is operable to execute the method in the first aspect or the second aspect.

In a seventh aspect, a computer program product is provided in the disclosure. The computer program product includes a non-transitory computer-readable storage medium storing a computer program. The computer program, when executed by a processor, is operable to execute the method in the first aspect or the second aspect.

By implementing the disclosure, the following beneficial effects can be achieved. In embodiments of the disclosure, a first model is trained using vehicle data of a vehicle supported for diagnosis by a vehicle diagnostic product, and then an interaction apparatus obtains a first question in response to an input operation of a user, where the first question is used for querying vehicle information supported for diagnosis. Next, the interaction apparatus obtains a first answer to the first question based on the first question and the first model. Then, the interaction apparatus displays the first answer. That is, artificial intelligence is adopted to help the user query or determine the vehicle information supported for diagnosis, without manual searching and querying by the user on an interface of the vehicle diagnostic product, which is both efficient and accurate and can improve the user experience.

### BRIEF DESCRIPTION OF THE DRAWINGS

To describe technical solutions in embodiments of the disclosure more clearly, the following will give a brief introduction to the accompanying drawings required for describing the embodiments. Apparently, the accompanying drawings in the following description illustrate some embodiments of the disclosure. Those of ordinary skill in the art may also obtain other drawings based on these accompanying drawings without creative effort.
FIG. 1 is a schematic structural diagram of a first model provided in embodiments of the disclosure.
FIG. 2 is a schematic diagram of an interaction system provided in embodiments of the disclosure.
FIG. 3 is a schematic structural diagram of a knowledge graph based on vehicle data supported for diagnosis provided in embodiments of the disclosure.
FIG. 4 is a schematic flowchart of an interaction method provided in embodiments of the disclosure.
FIG. 5 is a schematic diagram illustrating determination of an intention of a user based on a preset function button provided in embodiments of the disclosure.
FIG. 6 is a schematic interaction flowchart of an interaction method provided in embodiments of the disclosure.
FIG. 7 illustrates a method for training a first model provided in embodiments of the disclosure.
FIG. 8 is another schematic structural diagram of a first model provided in embodiments of the disclosure.
FIG. 9 is yet another schematic structural diagram of a first model provided in embodiments of the disclosure.
FIG. 10 is a schematic diagram of a scenario provided in embodiments of the disclosure.
FIG. 11 is another schematic diagram of a scenario provided in embodiments of the disclosure.
FIG. 12 is a block diagram illustrating functional units of an interaction apparatus provided in embodiments of the disclosure.
FIG. 13 is a block diagram illustrating functional units of a server provided in embodiments of the disclosure.
FIG. 14 is a schematic structural diagram of an electronic device provided in embodiments of the disclosure.

### DETAILED DESCRIPTION

The following will describe technical solutions of embodiments of the disclosure clearly and completely with reference to the accompanying drawings in embodiments of the disclosure. Apparently, embodiments described herein are some embodiments, rather than all embodiments, of the disclosure. Based on the embodiments of the disclosure, all other embodiments obtained by those of ordinary skill in the art without creative effort shall fall within the protection scope of the disclosure.

The terms "first", "second", "third", "fourth", and the like used in the specification, the claims, and the accompany drawings of the disclosure are used to distinguish different objects rather than describe a particular order. In addition, the terms "include", "comprise", and "have" as well as variations thereof are intended to cover non-exclusive inclusion. For example, a process, method, system, product, or device including a series of steps or units is not limited to the listed steps or units, and instead, it can optionally include other steps or units that are not listed or other steps or units inherent to the process, method, product, or device.

The "embodiment" or "implementation" referred to herein means that a particular feature, structure, or characteristic described in connection with the embodiment or implementation may be included in at least one embodiment of the disclosure. The phrase appearing in various places in the specification does not necessarily refer to the same embodiment, nor does it refer to independent or alternative embodiments that are mutually exclusive to other embodiments. It will be explicitly and implicitly understood by those skilled in the art that the embodiments described herein may be combined with other embodiments.

First, related terms and the related art involved in embodiments of the disclosure will be described.

A first model. In embodiments of the disclosure, the first model may be a large model based on a transformer architecture, such as a generative pre-trained transformer (GPT) model, and the first model may mainly consist of multiple decoders in the transformer architecture.

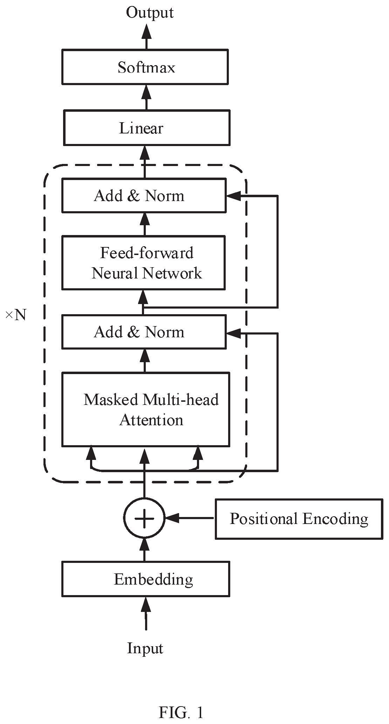

Exemplarily, reference can be made to FIG. 1, where FIG. 1 is a schematic structural diagram of a first model provided in embodiments of the disclosure.

As illustrated in FIG. 1, the first model includes *N* decoders, and each decoder mainly includes an embedding layer (Embedding), a masked multi-head attention layer, a normalization layer (Norm), a feed-forward neural network, a linear layer (Linear), and an activation layer (Softmax). Taking one decoder as an example, for an input (Input) to the first model, first, vector embedding (Embedding) is performed on the input (Input) and positional encoding (Positional Encoding) is added to obtain a first feature vector corresponding to the input. Then, masked multi-head attention mechanism processing is performed on the first feature vector to obtain a second feature vector corresponding to the input. Then, residual connection (Add) and then normalization (Norm) are performed on the first feature vector and the second feature vector corresponding to the input, to obtain a third feature vector corresponding to the input. Then, the third feature vector is input to the feed-forward neural network for processing, to obtain a fourth feature vector corresponding to the input. Then, residual connection (Add) and then normalization (Norm) are performed on the third feature vector and the fourth feature vector, to obtain a fifth feature vector corresponding to the input. Then, the fifth feature vector is input to the linear layer for linear processing, followed by activation, to obtain a prediction probability for the input, which is generally a probability distribution for the input. Therefore, a final output (Output) can be determined based on the prediction probability. The specific process is as follows.

If the input is a question belonging to the discriminative classification such as binary classification and multi-class classification, the prediction probability obtained herein based on Softmax can be understood as a prediction probability for the input in each classification category, i.e., a probability distribution. For example, a probability for the input in the classification category is 1, and otherwise, a probability for the input is 0. A corresponding label thereof is a true probability for the input in each classification category. Therefore, a classification category with the maximum probability in the probability distribution for the input can be determined as an output corresponding to the input.

If the input is a generative question, for example, with a question as an input and an answer to the question as an output, since the generative approach is auto-regressive, a complete output cannot be directly obtained like the discriminative approach using a probability distribution obtained through Linear and Softmax. That is, a complete output sequence is not output at once, and instead, an element in an output column is generated through step-by-step prediction until the complete output is obtained.

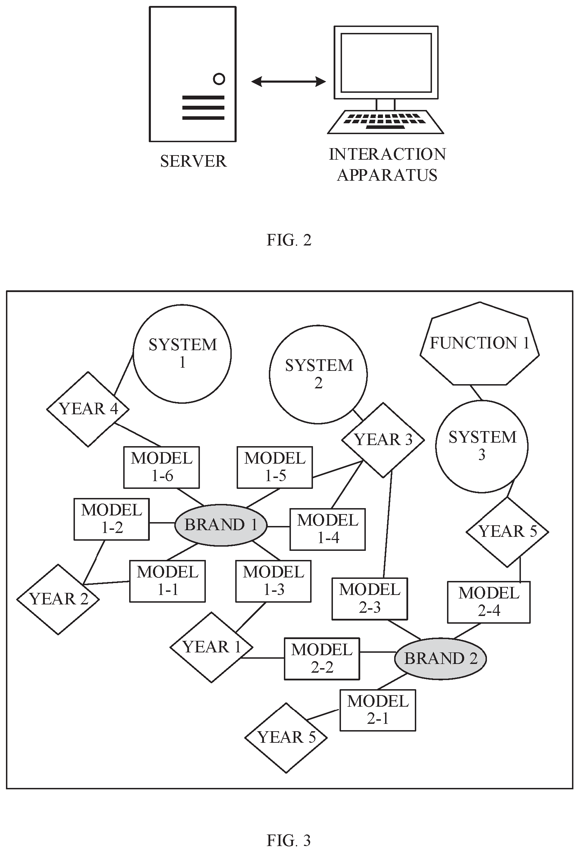

First, reference can be made to FIG. 2, where FIG. 2 is a schematic diagram of an interaction system provided in embodiments of the disclosure.

As illustrated in FIG. 2, the interaction system illustrated in FIG. 2 includes an interaction apparatus and a server. The server may be an independent physical server, or may be a server cluster or a distributed system including multiple physical servers, or may be a cloud server that provides basic cloud computing services such as a cloud service, a cloud database, cloud computing, a cloud function, cloud storage, a network service, cloud communication, a middleware service, a domain name service, a security service, big data, and an artificial intelligence platform, which is not limited in the disclosure. The interaction apparatus may be a user terminal, for example, a smart phone, a tablet computer, a notebook computer, a desktop computer, a smart television, a smart watch, a smart in-vehicle device, or other smart terminals, which is not limited in this regard. One or more user terminals may be provided, which is not limited in the disclosure. A target application or a target web page can be installed on the interaction apparatus, and a user can perform data query and interaction (for example, querying vehicle information supported for diagnosis, etc.) by using the target application or the target web page, thereby realizing a human-computer interaction function. Details are as follows.

The user can perform data query by using the target application or the target web page on the interaction apparatus, for example, can perform an input operation on a first interface of the target application or the target web page, and then in response to the input operation of the user, the interaction apparatus obtains a first question input by the user, where the first question is used for characterizing vehicle information supported for diagnosis that the user wants to query. Then, the interaction apparatus can send the first question to the server, where the server is deployed with a first model, and the first model is trained using vehicle data of a vehicle supported for diagnosis by a vehicle diagnostic product (it may be noted that, a method for training the first model will not be described in detail herein, and for details, reference can be made to corresponding illustrations in the following embodiments). Next, the server inputs the first question to the first model to output a first answer to the first question. Afterwards, the server sends the first answer to the interaction apparatus, and accordingly, the interaction apparatus receives the first answer and displays the first answer. In this case, the first question and the first answer constitute a dialogue (also referred to as a round of dialogue). By analogy, the user can perform multiple rounds of dialogue through the interaction apparatus, and each round of dialogue has a similar principle.

It may be noted that, the interaction apparatus and the server in the interaction system illustrated in FIG. 2 can also perform other corresponding operations in the following embodiments, which will not be described in detail herein. For details, reference can be made to the following embodiments.

It may be noted that based on the interaction method in the disclosure, the user can query corresponding data, for example, vehicle information supported for diagnosis, a vehicle repair solution, a vehicle sales condition, and any other questions that the user wants to query, and the disclosure is not limited in this regard. In the following embodiments of the disclosure, an intention of querying the vehicle information supported for diagnosis is mainly taken as an example for illustration. Before method embodiments are introduced, vehicle data of a vehicle supported for diagnosis by a vehicle diagnostic product involved in embodiments of the disclosure will be first described. Details are as follows.

In embodiments of the disclosure, the vehicle data of the vehicle supported for diagnosis by the vehicle diagnostic product can be collected. The vehicle data mainly includes module contents such as a brand, a model, and a year of the vehicle supported for diagnosis, and may also include module contents such as a system and a function of the vehicle, which will not be listed in the disclosure. For example, vehicle types may include various types of vehicles such as commercial vehicles, passenger vehicles, motorcycles, and new-energy vehicles, which will not be listed herein. Each type of vehicle may include vehicles of different brands, and there are different models, years, systems, functions, or the like for vehicles of each brand.

Further, a corresponding first database can be constructed based on the vehicle data supported for diagnosis by the vehicle diagnostic product. In this case, each data in the first database can be stored in a first preset format, and all data in the first database can completely reflect a correspondence or an association between module contents in the above vehicle data, for example, all vehicle models under one brand.

As an example, the module contents in the above vehicle data include a vehicle brand, a vehicle model, a vehicle year, a vehicle system, and a vehicle function. For example, the first preset format is "vehicle type_vehicle brand_vehicle model_vehicle year_vehicle system_vehicle function". Herein, positions of contents of various modules in the first preset format may be swapped, and the number of contents belonging to the same module may be one or more, for example, there are multiple vehicle models and multiple vehicle years. "_" represents a separator (other symbols may also be used as separators, which is not limited in the disclosure). For some vehicles, if part of contents such as a vehicle type, a vehicle brand, a vehicle model, a vehicle year, a vehicle system, and a vehicle function are absent, then the part of the contents in corresponding data is null (NULL), provided that any two pieces of data are finally different. For example, first data: brand 1_model 1_year 1_system 1_function 1; second data: brand 1_model 2_year 2_system 1_function 1; and third data: brand 1_model 3_year 3_system 1_NULL.

In an optional embodiment, the first database may also be a knowledge graph generated based on the vehicle data. In this case, template contents such as a vehicle type, a vehicle brand, a vehicle signal, a vehicle year, a vehicle system, and a vehicle function in the vehicle data can be used as entities in the knowledge graph. A correspondence or an association between the template contents such as the vehicle type, the vehicle brand, the vehicle signal, the vehicle year, the vehicle system, and the vehicle function is represented by a connecting line, and the knowledge graph corresponding to the vehicle data supported for diagnosis is generated together.

For example, reference can be made to FIG. 3, where FIG. 3 is a schematic structural diagram of a knowledge graph based on vehicle data supported for diagnosis provided in embodiments of the disclosure. As illustrated in FIG. 3, each content in FIG. 3 serves as an entity of the knowledge graph, and a connecting line represents presence of an association or a correspondence. Specifically, models corresponding to brand 1 include model 1-1, model 1-2, model 1-3, model 1-4, model 1-5, and model 1-6; and a year corresponding to brand 1 and model 1-1 includes year 2, a year corresponding to brand 1 and model 1-2 includes year 2, a year corresponding to brand 1 and model 1-3 includes year 1, a year corresponding to brand 1 and model 1-4 includes year 3 and a system corresponding to brand 1 and model 1-4 includes system 2, a year corresponding to brand 1 and model 1-5 includes year 3 and a system corresponding to brand 1 and model 1-5 includes system 2, and a year corresponding to brand 1 and model 1-6 includes year 4 and a system corresponding to brand 1 and model 1-6 includes system 1. Similarly, models corresponding to brand 2 include model 2-1, model 2-2, model 2-3, and model 2-4; and a year corresponding to brand 2 and model 2-1 includes year 5, a year corresponding to brand 2 and model 2-2 includes year 1, a year corresponding to brand 2 and model 2-3 includes year 3 and a system corresponding to brand 2 and model 2-3 includes system 2, and a year corresponding to brand 2 and model 2-4 includes year 5 and a system corresponding to brand 2 and model 2-4 includes system 3 and a function corresponding to brand 2 and model 2-4 includes function 1.

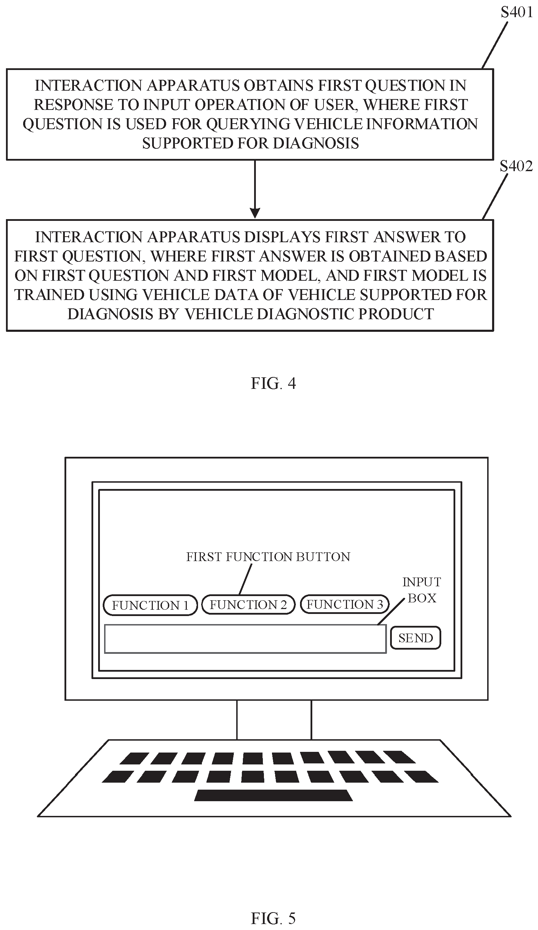

Further, reference can be made to FIG. 4, where FIG. 4 is a schematic flowchart of an interaction method provided in embodiments of the disclosure. The method is applied to the interaction apparatus in the above embodiments. The method includes, but is not limited to, operations at S401 and S402.

S401, the interaction apparatus obtains a first question in response to an input operation of a user, where the first question is used for querying vehicle information supported for diagnosis.

In embodiments of the disclosure, the user can input the first question through the interaction apparatus (for example, a target application or a target web page, which will not be repeated). Then, in response to the input operation of the user, the interaction apparatus obtains the first question input by the user, where the first question is used for characterizing querying of the vehicle information supported for diagnosis. Then, the interaction apparatus sends the first question to a server.

S402, the interaction apparatus displays a first answer to the first question, where the first answer is obtained based on the first question and a first model, and the first model is trained using vehicle data of a vehicle supported for diagnosis by a vehicle diagnostic product.

Accordingly, the server receives the first question from the interaction apparatus, and then the server generates the first answer to the first question based on the first question and the first model. Then, the server sends the first answer to the interaction apparatus, and accordingly, the interaction apparatus receives and displays the first answer for the user to view. In addition, a form of the first question may be a text form or a voice form, which is not limited in the disclosure. When the first question received by the server is in the voice form, the server can perform text conversion on the first question, for example, based on automatic speech recognition (ASR) technology, and then perform subsequent operations based on converted text, which will not be repeated herein.

Specifically, generating, by the server, the first answer to the first question based on the first question and the first model includes operations at S11 and S12.

S11, a first intention of the user is obtained. The first intention is used for determining the vehicle information supported for diagnosis.

In embodiments of the disclosure, there may be the following at least two manners for obtaining the first intention.
(1) After receiving the first question from the interaction apparatus, the server obtains a first keyword by performing keyword recognition on the first question, where the first keyword may be implemented as one or more first keywords, which is not limited in the disclosure. Then, the server determines the first intention from multiple preset intentions by comparing the first keyword with a preset keyword corresponding to each of the multiple preset intentions. For example, the server calculates a similarity between the first keyword and the preset keyword corresponding to each of the multiple preset intentions, where a specific principle of determining the similarity is not limited in the disclosure, and then the server determines a preset intention corresponding to a preset keyword with the maximum similarity as the first intention. That is to say, in this manner, the server receives no first intention of the user from the interaction apparatus, and determines the first intention through intention recognition based on the first question input by the user.
(2) A first interface of a target application or a target web page on the interaction apparatus may include at least one preset function button, and each preset function button corresponds to one intention. For example, the intention may include determining/querying vehicle information supported for diagnosis by a current vehicle diagnostic product, obtaining/querying a repair solution for a vehicle, querying an after-sales rule for a sales product, etc. Then, if the user wants to determine/query the vehicle information supported for diagnosis, the user can touch or select a first function button. Next, the interaction apparatus obtains the first intention of the user in response to a touch operation of the user on the first function button. After the interaction apparatus obtains the first question input by the user, the interaction apparatus sends the first intention to the server in addition to sending the first question to the server, and accordingly, the server obtains the first question and the first intention. That is to say, in this manner, for an intention of the user, the user selects the first function button corresponding to the first intention by using the interaction apparatus, and then the interaction apparatus directly sends the first intention to the server. Certainly, if the user does not select a preset function button corresponding to the intention, the intention of the user still needs to be determined based on manner (1), which will not be repeated herein.

For ease of understanding, the following will give a description with reference to the accompanying drawings. Reference can be made to FIG. 5, where FIG. 5 is a schematic diagram illustrating determination of an intention of a user based on a preset function button provided in embodiments of the disclosure. As illustrated in FIG. 5, an interface illustrated in FIG. 5 is a first interface of a target application or a target web page displayed on an interaction apparatus, which includes an input box (for the user to input contents, such as a question), a function button corresponding to function 1, a first function button corresponding to function 2, a function button corresponding to function 3, and a "send" function button. Each of function 1, function 2, and function 3 corresponds to one intention. For example, function 2 represents determining/querying vehicle information supported for diagnosis. There may be multiple function buttons, and three function buttons are merely taken as an example for illustration in the disclosure. For example, when the user wants to determine/query the vehicle information supported for diagnosis, the user may select the first function button, and inputs a first question in the input box and then click "send". The interaction apparatus obtains an intention corresponding to the first function button, i.e., a first intention, and the first question, and sends the first intention and the first question to a server. In addition, it may be noted that, selecting the first function button and inputting the first question in the input box by the user do not have a sequential order, which is not limited in the disclosure. Certainly, the user may not select the corresponding first function button, and only inputs the first question in the input box and then clicks "send". The interaction apparatus obtains the first question and sends the first question to the server, and the server determines the first intention based on the first question.

S12, the first answer is obtained based on the first question, a database corresponding to the first intention, and the first model.

Exemplarily, first, the server can obtain first data related to the first question by searching a first database corresponding to the first intention based on the first question. The first database is generated based on the vehicle data of the vehicle supported for diagnosis by the vehicle diagnostic product. In embodiments of the disclosure, a database corresponding to each intention can be constructed in advance. For example, the first database corresponding to the first intention is constructed, and a principle thereof will not be repeated herein. For another example, for an intention of obtaining/querying a repair solution for a vehicle, a database corresponding to the intention can be constructed based on various repair data of the vehicle. Next, the server obtains the first data related to the first question by searching the first database corresponding to the first intention based on the first question. For example, similarities between the first question and data in the first database are calculated (a specific principle is not limited in the disclosure), and then data with a similarity greater than a first threshold is determined as the first data.

Then, the server generates a first prompt (or prompt word) based on the first question and the first data. For example, the server can concatenate the first question and the first data to serve as the first prompt. Alternatively, the server can embed the first question and the first data in a preset prompt template according to the preset prompt template, to obtain the first prompt.

Then, the server obtains the first answer based on the first prompt and the first model. For example, the server can input the first prompt to the first model, i.e., use the first prompt as an input to the first model, to output the first answer to the first question. In this case, taking the first prompt as the input to the first model, for specific operations, reference can be made to the operations on the input (Input) performed by the first model in the embodiments illustrated in FIG. 1, which will not be repeated herein.

In an optional embodiment, in terms of obtaining the first answer based on the first question, the database corresponding to the first intention, and the first model, the server can generate multiple third answers based on the first database and multiple preset answer templates after obtaining the first intention, where the multiple third answers are in one-to-one correspondence with the multiple preset answer templates. Next, the server determines a first matching result corresponding to the first question from the multiple third answers based on the first question. For example, the server can calculate a similarity between the first question and each of the third answers, and then determine a third answer with a similarity greater than a second threshold as the first matching result. Then, the server generates the first answer based on the first matching result, the first database, the first question, and the first model. Details are as follows.

In this case, the first database is a knowledge graph generated based on the vehicle data. Then, if the first matching result is null, the server obtains a fourth question by performing entity annotation on the first question according to an entity in the knowledge graph (which will not be repeated herein). For example, the server can identify a third entity of the first question, and if the knowledge graph includes the third entity, the server annotates the third entity of the first question. There are many forms of annotation, for example, annotating the third entity with a separator, which is not limited in the disclosure. Next, the server generates the first answer based on the fourth question, the knowledge graph, and the first model, that is, the server inputs the fourth question as a prompt to the first model together with the knowledge graph, and then the server performs the following operations based on the first model.

First, a ninth feature is obtained by performing feature extraction on the fourth question, which can be understood as operations corresponding to the embedding layer and positional encoding in FIG. 1. In addition, a second feature corresponding to the knowledge graph is obtained by performing feature extraction on the knowledge graph. For example, a relationship(s) between entities in the knowledge graph can be converted into a corresponding graph structure. In this case, an entity corresponds to a node in the graph structure, and a relationship(s) between the entities corresponds to an edge(s) in the graph structure. Then, feature extraction is performed on the graph structure to obtain the second feature. In this case, the second feature can be understood as a feature matrix, and the feature matrix includes a feature vector corresponding to each entity in the knowledge graph (or includes a feature vector corresponding to each node in the graph structure).

It may be noted that in the disclosure, matched feature extractors may be used for feature extraction on the fourth question and feature extraction on the knowledge graph respectively. For example, a first feature extractor is used for feature extraction on the fourth question (e.g., corresponding to the embedding layer and positional encoding in FIG. 1), and a second feature extractor is used for feature extraction on the knowledge graph. The second feature extractor may be an encoder for feature extraction on an image.

Then, a third feature is obtained by performing graph convolution on the second feature. For example, a graph convolutional network (GCN) is used for graph convolution on the second feature. A specific principle of the graph convolution will not be described in detail herein, and for details, reference can be made to corresponding illustrations in the following embodiments. Next, a tenth feature is obtained by performing attention processing based on the ninth feature and the third feature. For example, cross-attention processing may be performed on the ninth feature and the third feature, or self-attention processing may be separately performed on the ninth feature and the third feature before the cross-attention processing, which is not limited in the disclosure. Finally, a second answer is generated based on the tenth feature. For example, for a fourth feature, the tenth feature is processed according to the operations on the first feature vector performed by the first model in the embodiments illustrated in FIG. 1, so as to obtain the first answer. Details are as follows.

Masked multi-head attention mechanism processing is performed on the tenth feature to obtain an eleventh feature. Then, residual connection and then normalization are performed on the tenth feature and an eleventh feature vector, to obtain a twelfth feature corresponding to the input. Then, the twelfth feature is input to a feed-forward neural network for processing, to obtain a thirteenth feature. Then, residual connection and then normalization (Norm) are performed on the twelfth feature and the thirteenth feature, to obtain a fourteenth feature. Then, the fourteenth feature is input to a linear layer for linear processing, followed by activation, to obtain a prediction probability corresponding to the first question. Therefore, a first answer corresponding to a first prediction probability can be determined based on the prediction probability.

In an optional embodiment, for the case where the user does not know specific information of a vehicle, the user can input a first vehicle image and a first question for the first vehicle image, where the first question may be used for querying whether a vehicle (or information of the vehicle) in the first vehicle image is supported for diagnosis. In this case, in response to an input operation of the user, the interaction apparatus obtains the first vehicle image and the first question input by the user, and sends the first question and the first vehicle image to the server.

In this case, data of a vehicle supported for diagnosis by a diagnostic product includes text data and image data. The text data includes one or more of a brand, a model, a year, a system, a function, or the like of the vehicle supported for diagnosis, and the image data includes an image of the vehicle supported for diagnosis. Next, the server generates multiple image-text pairs based on the text data and the image data. There is an association between text and an image in each image-text pair. For example, there is a correspondence between text (such as a model) and vehicle information (such as a brand) of a vehicle in the image, which will not be repeated herein. Then, the server performs the following operations based on the first model.

Feature extraction is performed on an image in each image-text pair to obtain a first image feature corresponding to the image in each image-text pair, and feature extraction is performed on text in each image-text pair to obtain a fifth feature corresponding to the text in each image-text pair. Next, attention processing is performed on the first image feature and the fifth feature corresponding to each image-text pair to obtain a sixth feature corresponding to each image-text pair. Certainly, before the attention processing, the first image feature and the fifth feature may also be first mapped to the same dimensional space.

Then, feature extraction is performed on the first vehicle image to obtain a third image feature. Next, the first answer is generated based on the sixth feature corresponding to each image-text pair, the third image feature, and the tenth feature (a principle thereof will not be repeated herein). For example, fusion (contact) (such as concatenation and weighting) may be performed on the sixth feature corresponding to each image-text pair, the third image feature, and the fourth feature, to obtain a first fusion feature. Optionally, the server may also first determine a first similarity between the third image feature and the sixth feature corresponding to each image-text pair; then the server obtains a first image-text pair by filtering the multiple image-text pairs based on the first similarity corresponding to each image-text pair; and then obtains a first fusion feature by fusing a sixth feature corresponding to the first image-text pair and the tenth feature.

Then, the server generates the first answer by predicting the first fusion feature using the first model. For example, for the first fusion feature, the server processes the first fusion feature according to the operations on the first feature vector performed by the first model in the embodiments illustrated in FIG. 1, so as to obtain the first answer. A specific principle will not be repeated herein.

Otherwise, if the first matching result is not null, the server obtains a third entity by performing entity recognition on the first question. Next, the server determines, based on the third entity and the data of the vehicle supported for diagnosis by the vehicle diagnostic product, a fourth entity associated with the third entity. For example, there is an association between entities that are in a direct or indirect connection relationship in the embodiments illustrated in FIG. 3. Then, the server obtains historical diagnostic data of the vehicle diagnostic product on the third entity and the fourth entity. For example, if the third entity and the fourth entity correspond to "brand 1_model 1", the historical diagnostic data is diagnostic data (such as the total number (or quantity) of diagnoses, diagnosed systems and their quantity, diagnosed function and their quantity, and a quality feedback result for diagnosis) on a vehicle with "brand 1_model 1".

Then, the server obtains a seventh feature by performing feature extraction on the historical diagnostic data based on the first model, and obtains a fifteenth feature by performing feature extraction on the first matching result. Afterwards, the server generates the first answer based on the seventh feature and the fifteenth feature by using the first model. For example, the server obtains a second fusion feature by fusing the seventh feature and the fifteenth feature (which will not be repeated herein), and then uses the first model for prediction based on the second fusion feature to generate the first answer. For example, the server obtains the first answer by processing the second fusion feature according to the operations on the first feature vector performed by the first model in the embodiments illustrated in FIG. 1, and a specific principle will not be repeated herein. In this case, the first answer obtained is an answer obtained through adjustment and optimization of the first matching result. For example, the contents of the first answer include diagnostic reference data in addition to an answer to the first question. In this case, the diagnostic reference data is generated based on the historical diagnostic data, which can not only enrich the contents of an answer but also provide a diagnostic reference for a user, thereby increasing the willingness of the user to select the diagnostic product.

The following will introduce another schematic flowchart of an interaction method according to the disclosure. The method is applied to the server in the above embodiments. The method includes, but is not limited to, operations at S21 and S22.

S21, the server obtains a first question. The first question is used for querying vehicle information supported for diagnosis.

In embodiments of the disclosure, a user can input the first question through an interaction apparatus, and then the interaction apparatus obtains the first question in response to an input operation of the user. Then, the interaction apparatus sends the first question to the server, and accordingly, the server receives the first question from the interaction apparatus.

S22, the server generates a first answer to the first question based on the first question and a first model. The first model is trained using vehicle data of a vehicle supported for diagnosis by a vehicle diagnostic product.

It may be noted that for specific principles of the operations at S21 and S22, reference can be correspondingly made to corresponding illustrations of the operations at S401 and S402 in the above embodiments, which will not be repeated herein.

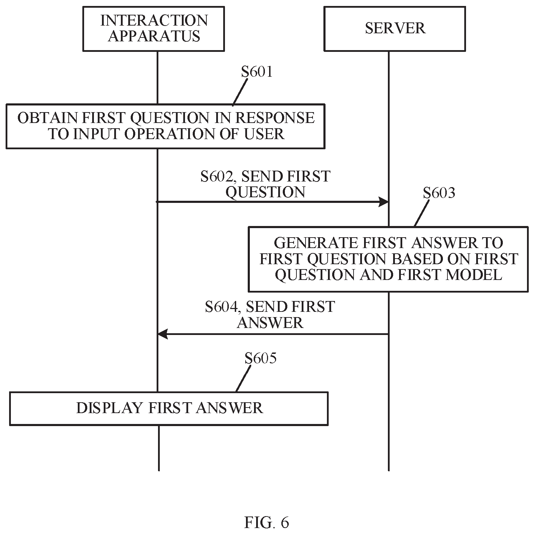

Reference can be made to FIG. 6, where FIG. 6 is a schematic interaction flowchart of an interaction method provided in embodiments of the disclosure. The method is applied to the interaction system in the above embodiments. The method includes, but is not limited to, operations at S601 to S605.

S601, an interaction apparatus obtains a first question in response to an input operation of a user.

The first question is used for querying vehicle information supported for diagnosis.

S602, the interaction apparatus sends the first question to a server.

S603, the server generates a first answer to the first question based on the first question and a first model.

The first model is trained using vehicle data of a vehicle supported for diagnosis by a vehicle diagnostic product.

S604, the server sends the first answer to the interaction apparatus.

S605, the interaction apparatus displays the first answer.

It may be noted that for specific principles of the operations at S601 to S605, reference can be correspondingly made to corresponding illustrations in the above embodiments, which will not be repeated herein.

It may be noted that, the first model in the disclosure is trained using the vehicle data of the vehicle supported for diagnosis by the vehicle diagnostic product. A principle of training the first model will be described in detail in combination with specific embodiments below. Details are as follows.

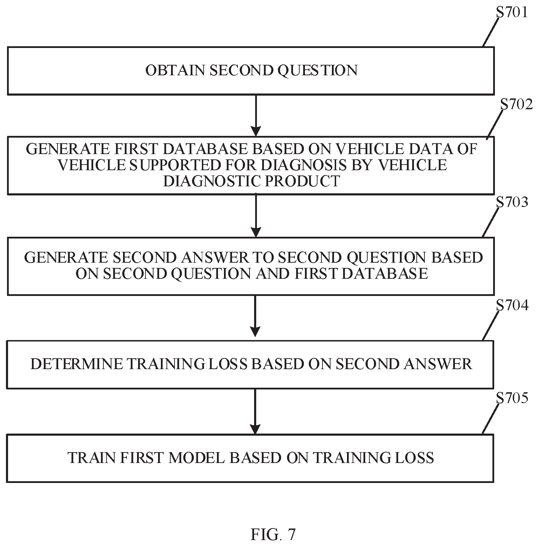

First, a method for training the first model will be introduced in combination with a structure of the first model in the embodiments illustrated in FIG. 1. Reference can be made to FIG. 7, where FIG. 7 illustrates a method for training a first model provided in embodiments of the disclosure. The method is applied to the server. The method includes, but is not limited to, operations at S701 to S705.

S701, a second question is obtained.

In embodiments of the disclosure, the second question is used as a training sample, and the number of training samples is not limited. One training sample is mainly taken as an example for illustration in embodiments of the disclosure.

S702, a first database is generated based on the vehicle data of the vehicle supported for diagnosis by the vehicle diagnostic product.

A principle of generating the first database will not be repeated herein. For details, reference can be made to corresponding illustrations in the above embodiments.

S703, a second answer to the second question is generated based on the second question and the first database.

Exemplarily, first, second data corresponding to the second question is obtained by searching the first database based on the second question, where a principle thereof is similar to a principle of obtaining the first data as described above and will not be repeated herein. Next, a second prompt is generated based on the second question and the second data, where a principle thereof is similar to a principle of generating the first prompt as described above and will not be repeated herein. Then, the second answer is generated based on the second prompt. For example, the second prompt is input to the first model, i.e., the second prompt is used as an input to the first model, to output the second answer to the second question. In this case, taking the second prompt as the input to the first model, for specific operations, reference can be made to the operations on the input (Input) performed by the first model in the embodiments illustrated in FIG. 1, which will not be repeated herein.

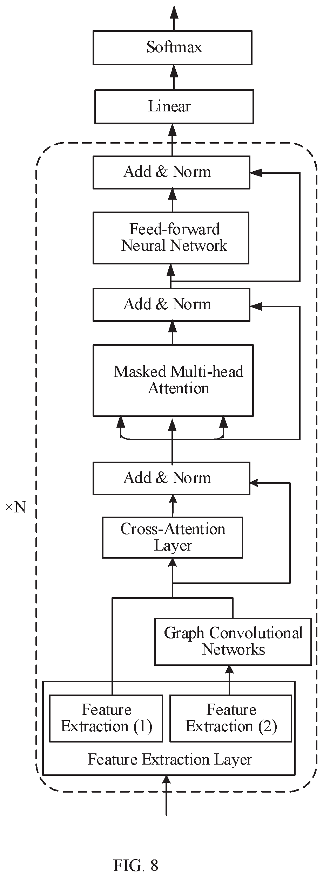

In an optional embodiment, reference can be made to FIG. 8 in combination with the embodiments illustrated in FIG. 1, where FIG. 8 is another schematic structural diagram of a first model provided in embodiments of the disclosure. As illustrated in FIG. 8, the first model includes *N* layers. Taking one layer as an example for illustration, the first model mainly includes a feature extraction layer, a GCN, a cross-attention layer, a masked multi-head attention layer, a feed-forward neural network, a normalization layer (Norm), a linear layer (Linear), and an activation layer (Softmax). The feature extraction layer includes a first feature extractor (i.e., Feature Extraction (1) in FIG. 8) and a second feature extractor (i.e., Feature Extraction (2) in FIG. 8). The first feature extractor may be a text encoder, and the second feature extractor may be an image encoder, which is not limited in the disclosure.

Therefore, at S703, in terms of generating the second answer to the second question based on the second question and the first database, the server can also generate multiple third answers based on the first database and multiple preset answer templates, where the multiple third answers are in one-to-one correspondence with the multiple preset answer templates, which will not be repeated herein. Next, the server determines a matching result corresponding to the second question from the multiple third answers based on the second question, with a principle similar to a principle of the first matching result as described above, which will not be repeated herein. Then, the server generates the second answer based on the matching result, the first database, and the second question. If the matching result is null, the specific process is as follows.

First, the server obtains a third question by performing entity annotation on the second question according to entities in a knowledge graph; and then obtains a first feature by inputting the third question to the first feature extractor Feature Extraction (1) for feature extraction, and obtains a second feature corresponding to the knowledge graph by inputting the knowledge graph (or a corresponding graph structure) to the second feature extractor Feature Extraction (2) for feature extraction, which will not be repeated herein.

Then, the server obtains a third feature by inputting the second feature to a graph convolutional network for graph convolution. Next, the server obtains a fourth feature by inputting the first feature and the third feature to the cross-attention layer for cross-attention processing. Afterwards, the server generates the second answer based on the fourth feature, with a principle similar to a principle of generating the second answer based on the tenth feature as described above. Reference can also be correspondingly made to the corresponding operations on the first feature vector performed by the first model in the embodiments illustrated in FIG. 1 to obtain the output (Output), which will not be repeated herein. In terms of generating the second answer based on the fourth feature, the server may also perform residual connection (Add) and normalization (Norm) on the fourth feature, the first feature, and the third feature to obtain a sixteenth feature, and then generates the second answer based on the sixteenth feature, i.e., following the corresponding operations on the first feature vector performed by the first model in the embodiments illustrated in FIG. 1.

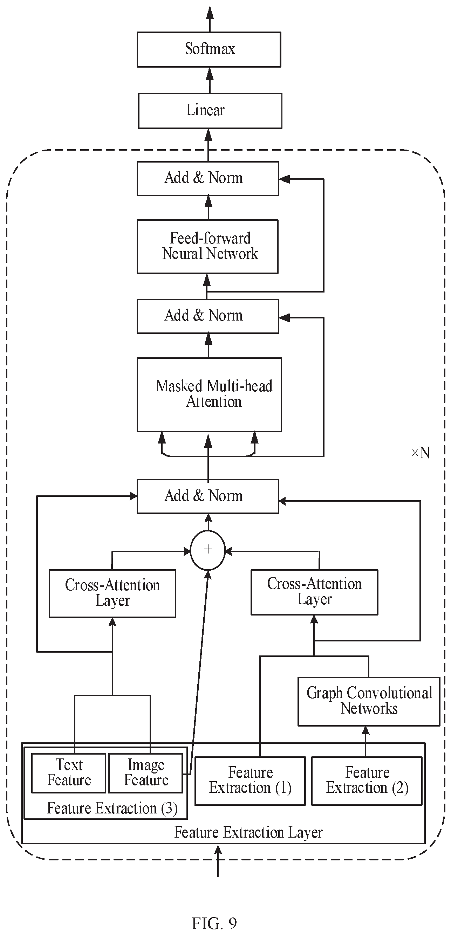

In an optional embodiment, based on the embodiments illustrated in FIG. 9, reference can be made to FIG. 9, where FIG. 9 is yet another schematic structural diagram of a first model provided in embodiments of the disclosure.

A feature extraction layer in the first model illustrated in FIG. 9 further includes a third feature extractor (Feature Extraction (3)), and the third feature extractor includes a text feature extractor (Text Feature) and an image feature extractor (Image Feature). For illustrations of the remaining models, reference can be made to illustrations of the embodiments illustrated in FIG. 8, which will not be repeated herein. In this case, the above vehicle data may include text data and image data. The text data includes one or more of a brand, a model, a year, a system, a function, or the like of a vehicle supported for diagnosis, and the image data includes an image of the vehicle supported for diagnosis.

Accordingly, in terms of generating the second answer based on the fourth feature, the server generates multiple image-text pairs based on the text data and image data. There is an association between text and an image in each image-text pair, which will not be repeated herein. Then, the server performs feature extraction on an image in each image-text pair by using the image feature extractor in the third feature extractor in the first model, to obtain a first image feature corresponding to the image in each image-text pair, and performs feature extraction on text in each image-text pair by using the text feature extractor in the third feature extractor in the first model, to obtain a fifth feature corresponding to the text in each image-text pair.

Then, the server obtains a sixth feature corresponding to each image-text pair by inputting the first image feature and the fifth feature corresponding to each image-text pair to a cross-attention layer (Cross-Attention Layer) for cross-attention processing. Next, the server obtains a first vehicle image corresponding to a first question and obtains a second image feature by inputting the first vehicle image to the image feature extractor in the third feature extractor for feature extraction.

Then, the server generates the second answer based on the sixth feature corresponding to each image-text pair, the second image feature, and the fourth feature. For example, as illustrated in FIG. 9, the server obtains a third fusion feature by fusing the sixth feature corresponding to each image-text pair, the second image feature, and the fourth feature. Optionally, the server may also first obtain a first image-text pair by filtering the multiple image-text pairs based on the second image feature and the sixth feature corresponding to each image-text pair, where a principle thereof will not be repeated herein, and then obtain a third fusion feature by fusing a sixth feature corresponding to the first image-text pair and the fourth feature. This disclosure is not limited in this regard.

Then, the server performs residual connection (Add) and then normalization (Norm) on the third fusion feature, the fifth feature, the first image feature corresponding to each image-text pair, the first feature, and the third feature, to obtain a seventeenth feature. Next, the server generates the second answer based on the seventeenth feature, with a principle similar to a principle of generating the second answer based on the sixteenth feature as described above, in other words, following the corresponding operations on the first feature vector performed by the first model in the embodiments illustrated in FIG. 1, which will not be repeated herein.

Otherwise, if the matching result is not null, then in terms of generating the second answer based on the matching result, the first database, and the second question, the server first obtains a first entity by performing entity recognition on the second question. Next, the server determines, based on the first entity and the vehicle data, a second entity associated with the first entity, which will not be repeated herein. Then, the server obtains historical diagnostic data of the vehicle diagnostic product on the first entity and the second entity, which will not be repeated herein. Afterwards, the server obtains a seventh feature by performing feature extraction on the historical diagnostic data by using the first feature extractor in the first model, and obtains an eighth feature by performing feature extraction on the matching result by using the first feature extractor in the first model. Finally, the server obtains the second answer based on the seventh feature and the eighth feature. For example, the server obtains an eighteenth feature by inputting the seventh feature and the eighth feature to the cross-attention layer for attention processing; then obtains a nineteenth feature by performing residual connection (Add) and then normalization (Norm) on the eighteenth feature, the seventh feature, and the eighth feature; and then generates the second answer based on the nineteenth feature, with a principle similar to a principle of generating the second answer based on the sixteenth feature as described above, in other words, following the corresponding operations on the first feature vector performed by the first model in the embodiments illustrated in FIG. 1, which will not be repeated herein.

S704, a training loss is determined based on the second answer.

After the second answer is generated, the training loss can be obtained by calculating a loss such as a cross-entropy loss or a mean squared error (MSE) loss based on the second answer and a true label corresponding to the training sample, i.e., the second question. A loss type is not limited in the disclosure.

S705, the first model is trained based on the training loss.

Then, a model can be trained based on the training loss. For example, full fine-tuning may be performed on the first model, or partial fine-tuning (or parameter-efficient fine-tuning) may be performed on the first model. For example, weights in masked multi-head attention or weights in cross-attention are fine-tuned, e.g., in a low-rank adaptation (LoRA) fine-tuning manner, which is not limited in in the disclosure, until the first model converges, to obtain the trained first model.

Further, after the first model is trained based on the method in the above embodiments until the first model converges, the application can be carried out based on the trained first model. The following will introduce a main application scenario involved in this disclosure with reference to the accompanying drawings. There are a server and an interaction apparatus in this scenario, and the first model is deployed on the server. Details are as follows.

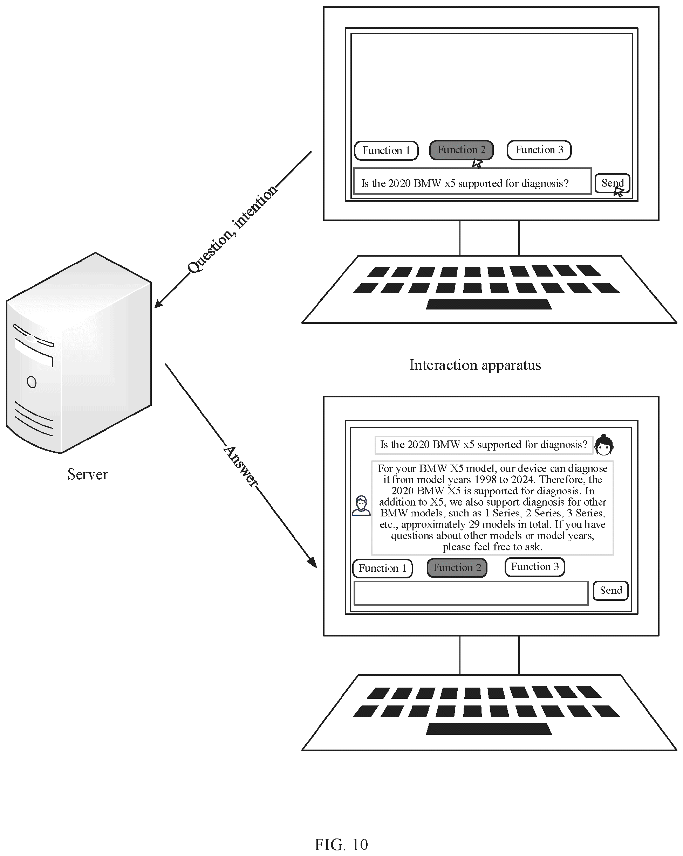

In combination with the embodiments illustrated in FIG. 5, reference can be made to FIG. 10, where FIG. 10 is a schematic diagram of a scenario provided in embodiments of the disclosure. As illustrated in FIG. 10, a user inputs a question "Is the 2020 BMW x5 supported for diagnosis?" in an input box displayed on a first interface of a target application or a target web page on the interaction apparatus. In this case, the question is used for querying vehicle information supported for diagnosis, i.e., with a brand of BMW, a model of x5, and a year of 2020. In addition, the user selects a first function button corresponding to function 2 (in this case, the function button is in a selected state, filled with shadows as illustrated in FIG. 10), and an intention corresponding of the first function button is "to determine the vehicle information supported for diagnosis". Then, the user can click a "send" function button, and the interaction apparatus sends the question and the intention to the server in response to this operation.

Accordingly, the interaction apparatus can display the question input by the user (not illustrated in FIG. 10), and the server receives the question and the intention. Then, the server generates, based on the question and a database corresponding to the intention, an answer to the question by using the first model, and a specific principle will not be repeated herein. An example of the answer illustrated in FIG. 10 is "For your BMW X5 model, our device can diagnose it from model years 1998 to 2024. Therefore, the 2020 BMW X5 is supported for diagnosis. In addition to X5, we also support diagnosis for other BMW models, such as 1 Series, 2 Series, 3 Series, etc., approximately 29 models in total. If you have questions about other models or model years, please feel free to ask." Afterwards, the server sends the answer to the interaction apparatus, and accordingly, the interaction apparatus receives and displays the answer, presenting a round of dialogue illustrated in FIG. 10.

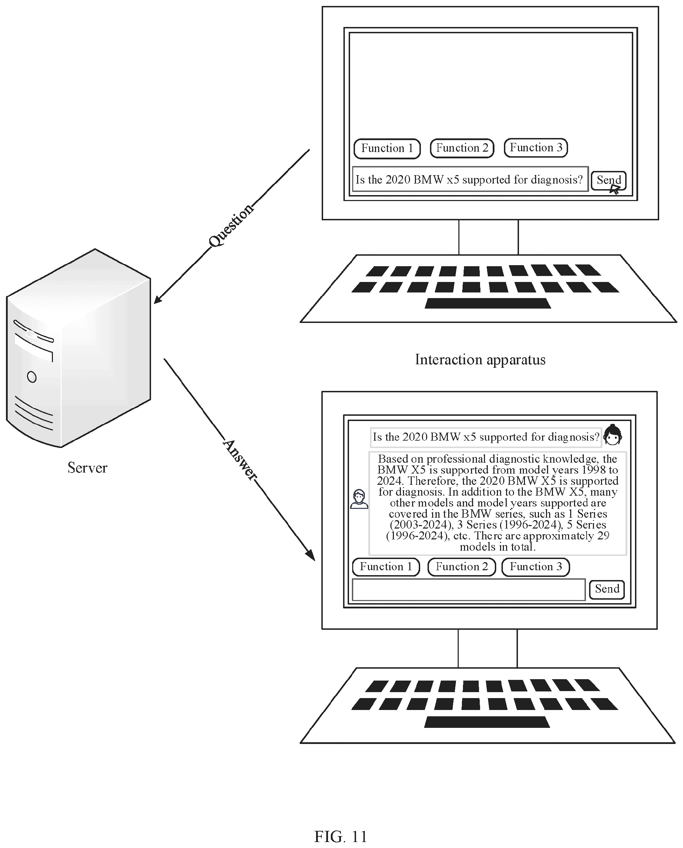

Certainly, optionally, reference can be made to FIG. 11, where FIG. 11 is another schematic diagram of a scenario provided in embodiments of the disclosure. As illustrated in FIG. 11, a user may not select any function button and simply input a question "Is the 2020 BMW x5 supported for diagnosis?" in an input box. In this case, the question is used for querying vehicle information supported for diagnosis, i.e., with a brand of BMW, a model of x5, and a year of 2020. Then, the user can click a "send" function button, and the interaction apparatus sends the question to the server in response to this operation.

Accordingly, the interaction apparatus can display the question input by the user (not illustrated in FIG. 11), and the server receives the question. Next, the server determines a corresponding intention based on the question. Then, the server generates, based on the question and a database corresponding to the intention, an answer to the question by using the first model, and a specific principle will not be repeated herein. An example of the answer illustrated in FIG. 11 is "Based on professional diagnostic knowledge, the BMW X5 is supported from model years 1998 to 2024. Therefore, the 2020 BMW X5 is supported for diagnosis. In addition to the BMW X5, many other models and model years supported are covered in the BMW series, such as 1 Series (2003-2024), 3 Series (1996-2024), 5 Series (1996-2024), etc. There are approximately 29 models in total." Afterwards, the server sends the answer to the interaction apparatus, and accordingly, the interaction apparatus receives and displays the answer, presenting a round of dialogue illustrated in FIG. 11.

It may be noted that, the contents such as questions, answers, and page layouts illustrated in the embodiments in FIG. 10 and FIG. 11 are merely taken as examples. Any corresponding extensions or variations based on these examples as well as the application of the interaction method in the disclosure in other scenarios fall within the protection scope of the disclosure.

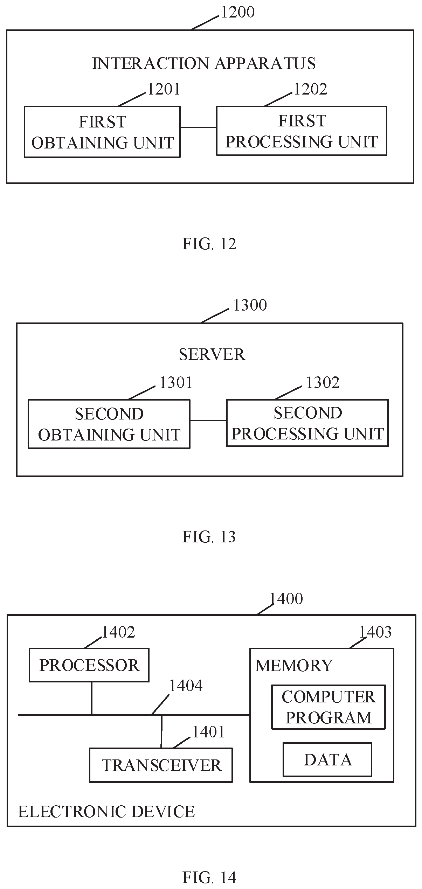

Reference can be made to FIG. 12, where FIG. 12 is a block diagram illustrating functional units of an interaction apparatus provided in embodiments of the disclosure. The interaction apparatus 1200 includes a first obtaining unit 1201 and a first processing unit 1202. The first obtaining unit 1201 is configured to obtain a first question in response to an input operation of a user, where the first question is used for querying vehicle information supported for diagnosis. The first processing unit 1202 is configured to display a first answer to the first question, where the first answer is obtained based on the first question and a first model, and the first model is trained using vehicle data of a vehicle supported for diagnosis by a vehicle diagnostic product.

In an implementation, the first obtaining unit 1201 and the first processing unit 1202 described in embodiments of the disclosure may also execute other methods executed by the interaction apparatus in other interaction method embodiments provided in embodiments of the disclosure, which will not be repeated herein.

Reference can be made to FIG. 13, where FIG. 13 is a block diagram illustrating functional units of a server provided in embodiments of the disclosure. The server 1300 includes a second obtaining unit 1301 and a second processing unit 1302. The second obtaining unit 1301 is configured to obtain a first question, where the first question is used for querying vehicle information supported for diagnosis. The second processing unit 1302 is configured to generate a first answer to the first question based on the first question and a first model, where the first model is trained using vehicle data of a vehicle supported for diagnosis by a vehicle diagnostic product.

In an implementation, the second obtaining unit 1301 and the second processing unit 1302 described in embodiments of the disclosure may also execute other methods executed by the server in the interaction method embodiments provided in embodiments of the disclosure, which will not be repeated herein.

Reference can be made to FIG. 14, where FIG. 14 is a schematic structural diagram of an electronic device provided in embodiments of the disclosure. As illustrated in FIG. 14, the electronic device 1400 includes a transceiver 1401, a processor 1402, and a memory 1403. The transceiver 1401, the processor 1402, and the memory 1403 are connected with one another via a bus 1404. The memory 1403 is configured to store a computer program and data, and the data stored in the memory 1403 can be transmitted to the processor 1402.

The electronic device 1400 may be an interaction apparatus 1200 or a server 1300.

The processor 1402 is configured to read, when the electronic device 1400 is the interaction apparatus 1200, the computer program in the memory 1403 to perform the following operations. The transceiver 1401 is controlled to obtain a first question in response to an input operation of a user, where the first question is used for querying vehicle information supported for diagnosis. A first answer to the first question is displayed, where the first answer is obtained based on the first question and a first model, and the first model is trained using vehicle data of a vehicle supported for diagnosis by a vehicle diagnostic product.

In an implementation, the transceiver 1401 and processor 1402 described in embodiments of the disclosure may also perform other implementations described in the interaction method embodiments provided in embodiments of the disclosure, which will not be repeated herein.

The processor 1402 is configured to read, when the electronic device 1400 is the server 1300, the computer program in the memory 1403 to perform the following operations. The transceiver 1401 is controlled to obtain a first question, where the first question is used for querying vehicle information supported for diagnosis. A first answer to the first question is generated based on the first question and a first model, where the first model is trained using vehicle data of a vehicle supported for diagnosis by a vehicle diagnostic product.

In an implementation, the transceiver 1401 and processor 1402 described in embodiments of the disclosure may also perform other implementations described in the interaction method embodiments provided in embodiments of the disclosure, which will not be repeated herein.

Specifically, the above transceiver 1401 may be the first obtaining unit 1201 in the interaction apparatus 1200 in the embodiments illustrated in FIG. 12 or the second obtaining unit 1301 in the server 1300 in the embodiments illustrated in FIG. 13. The above processor 1402 may be the first processing unit 1202 in the interaction apparatus 1200 in the embodiments illustrated in FIG. 12 or the second processing unit 1302 in the server 1300 in the embodiments illustrated in FIG. 13.

It may be understood that, a computer-readable storage medium is further provided in embodiments of the disclosure. The computer-readable storage medium is configured to store a computer program. The computer program is executed by a processor to implement part or all of operations of any interaction method described in the above method embodiments.

A computer program product is further provided in embodiments of the disclosure. The computer program product includes a non-transitory computer-readable storage medium storing a computer program. The computer program is operable with a computer to perform part or all of operations of any interaction method described in the above method embodiments.

It may be noted that, for the sake of simplicity, various method embodiments above are described as a series of action combinations. However, it will be appreciated by those skilled in the art that the disclosure is not limited by the sequence of actions described. According to the disclosure, some steps may be performed in other orders or simultaneously. In addition, it will be appreciated by those skilled in the art that the embodiments described in the specification are optional embodiments, and the actions and modules involved are not necessarily essential to the disclosure.

In the above embodiments, the description of each embodiment has its own emphasis. For the parts not described in detail in one embodiment, reference can be made to related illustrations in other embodiments.

It will be appreciated that the apparatuses disclosed in embodiments of the disclosure may also be implemented in various other manners. For example, the above apparatus embodiments are merely illustrative, e.g., the division of units is only a division of logical functions, and other manners of division may also be available in practice, e.g., multiple units or assemblies may be combined or may be integrated into another system, or some features may be ignored or omitted. In other respects, the coupling or direct coupling or communication connection as illustrated or discussed may be an indirect coupling or communication connection through some interface, device, or unit, and may be electrical or otherwise.

Units illustrated as separated components may or may not be physically separated. Components displayed as units may or may not be physical units, and may reside at one location or may be distributed to multiple networked units. Part or all of the units may be selectively adopted according to practical needs to achieve desired objectives of the solutions of embodiments.

In addition, various functional units described in various embodiments of the disclosure may be integrated into one processing unit or may be present as a number of physically separated units, and two or more units may be integrated into one. The integrated unit may take the form of hardware or a software program module.

If the integrated unit is implemented as software program modules and sold or used as standalone products, it may be stored in a computer-readable memory. Based on such an understanding, the essential technical solutions of the disclosure, or the portion that contributes to the prior art, or all or part of the technical solutions may be embodied as software products. The computer software products can be stored in a memory and may include multiple instructions that, when executed, can cause a computer device, e.g., a personal computer, a server, a network device, etc., to perform part or all operations of the methods described in various embodiments of the disclosure. The above memory may include various kinds of media that can store program codes, such as a universal serial bus (USB) flash disk, a read-only memory (ROM), a random access memory (RAM), a mobile hard drive, a magnetic disk, an optical disk, etc.

Those of ordinary skill in the art can understand that part or all of operations of various methods in the above embodiments can be implemented by instructing related hardware by a program. The program can be stored in a computer-readable memory. The memory may include a flash disk, an ROM, an RAM, a magnetic disk, an optical disk, etc.

The embodiments of the disclosure are introduced above in detail, the principle and implementations of the disclosure are elaborated with specific examples herein, and the descriptions made to the embodiments are only adopted to understand the method of the disclosure and the core concept thereof. In addition, those of ordinary skill in the art may make variations to the specific implementations and the application scope according to the concept of the disclosure. From the above, the contents of the specification shall not be understood as limitation on the disclosure.

## Claims

1. An interaction method, comprising:
obtaining a first question in response to an input operation of a user, wherein the first question is used for querying vehicle information supported for diagnosis; and
displaying a first answer to the first question, wherein the first answer is obtained based on the first question and a first model, and the first model is trained using vehicle data of a vehicle supported for diagnosis by a vehicle diagnostic product.

2. The method of claim 1, further comprising:
before displaying the first answer to the first question,
obtaining, by a server, a first intention of the user, wherein the first intention is used for determining the vehicle information supported for diagnosis; and
obtaining, by the server, the first answer based on the first question, a first database corresponding to the first intention, and the first model, wherein the first database is generated based on the vehicle data of the vehicle supported for diagnosis by the vehicle diagnostic product.

3. The method of claim 2, wherein obtaining the first intention of the user comprises:
obtaining the first intention of the user in response to a touch operation of the user on a first function button; or
obtaining a first keyword by performing keyword recognition on the first question; and
determining the first intention based on the first keyword.

4. The method of any one of claims 1 to 3, wherein a method for training the first model comprises:
obtaining a second question;
generating a first database based on the vehicle data;
generating a second answer to the second question based on the second question and the first database;
determining a training loss based on the second answer; and
training the first model based on the training loss.

5. The method of claim 4, wherein generating the second answer to the second question based on the second question and the first database comprises:
generating a plurality of third answers based on the first database and a plurality of preset answer templates, wherein the plurality of third answers are in one-to-one correspondence with the plurality of preset answer templates;
determining a matching result corresponding to the second question from the plurality of third answers based on the second question; and
generating the second answer based on the matching result, the first database, and the second question.

6. The method of claim 5, wherein the first database is a knowledge graph generated based on the vehicle data, and when the matching result is null, generating the second answer based on the matching result, the first database, and the second question comprises:
obtaining a third question by performing entity annotation on the second question according to an entity in the knowledge graph;
obtaining a first feature by performing feature extraction on the third question, and obtaining a second feature corresponding to the knowledge graph by performing feature extraction on the knowledge graph;
obtaining a third feature by performing graph convolution on the second feature;
obtaining a fourth feature by performing attention processing based on the first feature and the third feature; and
generating the second answer based on the fourth feature.

7. The method of claim 5, wherein when the matching result is not null, generating the second answer based on the matching result, the first database, and the second question comprises:
obtaining a first entity by performing entity recognition on the second question;
determining, based on the first entity and the vehicle data, a second entity associated with the first entity;
obtaining historical diagnostic data of the vehicle diagnostic product on the first entity and the second entity;
obtaining a seventh feature by performing feature extraction on the historical diagnostic data, and obtaining an eighth feature by performing feature extraction on the matching result; and
obtaining the second answer based on the seventh feature and the eighth feature.

8. An interaction apparatus, comprising:
a first obtaining unit configured to obtain a first question in response to an input operation of a user, wherein the first question is used for querying vehicle information supported for diagnosis; and
a first processing unit configured to display a first answer to the first question, wherein the first answer is obtained based on the first question and a first model, and the first model is trained using vehicle data of a vehicle supported for diagnosis by a vehicle diagnostic product.

9. An electronic device, comprising a processor and a memory, wherein the processor is connected with the memory, the memory is configured to store a computer program, and the processor is configured to execute the computer program stored in the memory, to cause the electronic device to execute the method of any one of claims 1 to 7.

10. A computer-readable storage medium storing a computer program, wherein the computer program is executed by a processor to implement the method of any one of claims 1 to 7.
